# FASCICULE DE BREVET EUROPEEN

(11) **EP 2 334 468 B1**
(45) Date de publication et mention de la délivrance du brevet: **10.04.2013**
(21) Numéro de dépôt: 09737078.7
(22) Date de dépôt: 17.07.2009
(51) Int. Cl.: B23Q 11/10, B23Q 1/25

(54) **PORTE OUTILS COMPORTANT DES MOYENS DE REFROIDISSEMENT A TUBE VORTEX**
WERKZEUGHALTER MIT KÜHLMITTELN MIT EINEM WIRBELROHR
TOOL HOLDER COMPRISING COOLING MEANS WITH A VORTEX TUBE

(30) Priorité: 30.07.2008 FR 0855242
(43) Date de publication de la demande: 22.06.2011
(73) Titulaire: European Aeronautic Defence And Space Company Eads France, 75016 Paris (FR); E.P.B., 67330 Bouxwiller (FR); Sarl Albret, 38530 Pontcharra (FR)
(72) Inventeur: ALLEHAUX, Delphine, F-13880 Velaux (FR); RABATE, Patrice, F-80800 Lahoussoye (FR); FREYERMUTH, Alain, F-67350 Plaffenhoffen (FR); CLEDAT, Jean, Bernard, F-38530 Pontcharra (FR); FANTIN, Jean-Pierre, F-60270 Gouvieux (FR); MASCIANTONIO, Ugo, F-59267 Proville (FR)
(74) Mandataire: Coquel, Jean-Marc
(86) Numéro de dépôt international: PCT/FR2009/051431
(87) Numéro de publication internationale: WO 2010/012933

(56) Documents cités:
- EP-A- 1 225 005
- EP-A- 1 640 091
- WO-A-01/15840
- WO-A-2007/101283
- DE-A1- 3 128 893
- DE-U1- 29 807 946

## Description

La présente invention concerne un porte outils comportant des moyens de refroidissement par soufflage d'air.

Il est connu de refroidir des outils pendant leur fonctionnement par un moyen embarqué dans les éléments constitutifs de leur système de fixation sur un porte outils.

Le refroidissement doit s'effectuer au niveau de l'outil de manière à réduire les températures atteintes au niveau de l'outil contribuant aux phénomènes d'endommagement de l'outil sous la combinaison des efforts résultant de son introduction dans la matière, du collage de copeaux sur goujures et/ou listel contribuant au phénomène de bourrage des copeaux.

Ce refroidissement de l'outil doit également contribuer à une réduction de la température du copeau, qui plus froid pourra se fractionner plus facilement, contribuant donc encore à une réduction du phénomène de bourrage des copeaux.

Actuellement, le refroidissement des outils est réalisé par l'utilisation d'une huile, d'un mélange d'huile et d'air pouvant se trouver à l'état de brouillard d'huile, voire par un soufflage d'air sec.

Cependant pour des matériaux à faible chaleur spécifique et faiblement conducteurs tels que les matériaux composites à matrice organique ou les métaux durs, aciers ou alliage de titane, le soufflage d'air sec n'est pas suffisant pour contrôler les niveaux de température issus du frottement de l'outil avec les matériaux. Il est nécessaire de réduire la température de plusieurs centaines de degrés pour réaliser l'opération sans endommagement de la matière et dans des conditions opératoires sans danger notamment en évitant les risques d'inflammabilité et économiquement acceptables.

L'enjeu est principalement lié à la mise en oeuvre de l'usinage à sec sans lubrifiant mais il est aussi nécessaire dans le cas général d'obtenir une meilleure résistance à l'endommagement des outils de coupe.

Dans ce but la présente invention prévoit un refroidissement des outils sur un porte outil par soufflage d'air et en particulier par soufflage d'air refroidi.

L'outil est refroidi par l'intérieur grâce à un flux d'air injecté par les canaux normalement utilisés par un liquide de refroidissement et par des jets d'air froid soufflant sur l'extérieur de l'outil.

L'air froid est produit par des tubes vortex connus aussi sous le nom tube de Ranque-Hilsch qui sont des dispositifs thermodynamiques sans pièce en mouvement permettant de produire de l'air froid dont l'origine est décrite dans le document US 1 952 281.

WO-2007/101283 décrit un porte-outils selon le préambule des revendication 1 et 7. Dans un tel tube, l'air injecté tangentiellement dans le tube crée par effet vortex un écoulement tourbillonnaire extrêmement rapide qui est freiné à une première extrémité du tube par une valve conique. L'échange de chaleur avec l'onde produite en retour refroidit l'air réfléchi qui sort à une seconde extrémité du tube.

Le tube vortex doit être alimenté en air comprimé entre 5 et 10 bars et la différence de température atteinte est de l'ordre de 70°C entre l'air entrant et le côté froid du tube ce qui est parfaitement adapté à l'utilisation pour le refroidissement d'outils.

L'invention concerne ainsi un porte outils pour machine d'usinage selon la revendication 1 ou 7.

Avantageusement, il comporte à une première extrémité un embout d'emmanchement adapté à le monter en lieu et place de l'outil sur la broche d'une machine d'usinage et comporte à une seconde extrémité opposée à la première une broche d'emmanchement d'un outil.

L'embout comporte avantageusement un alésage d'amenée d'air comprimé relié à des canaux de distribution en communication avec la ou les entrées d'air du dispositif à tube vortex.

Selon un premier mode de réalisation, le dispositif à tube vortex comporte des tubulure d'amenée d'air débouchant en périphérie de l'outil en sorte réaliser un soufflage par les goujures de l'outil.

Selon un mode de réalisation complémentaire ou alternatif, le dispositif à tube vortex comporte au moins une tubulure d'amenée d'air centrale débouchant au niveau de trous de l'outil pour réaliser un soufflage dans l'axe de l'outil.

Selon un mode de réalisation particulier, le dispositif à tube vortex alimente un circuit primaire d'un échangeur en air froid, un circuit secondaire de l'échangeur refroidissant de l'air comprimé avant son entrée dans des canaux de l'outil.

Selon un premier mode de réalisation on souffle l'air refroidi autour de l'outil.

Selon un mode de réalisation complémentaire ou alternatif, on souffle l'air refroidi dans un canal de l'outil.

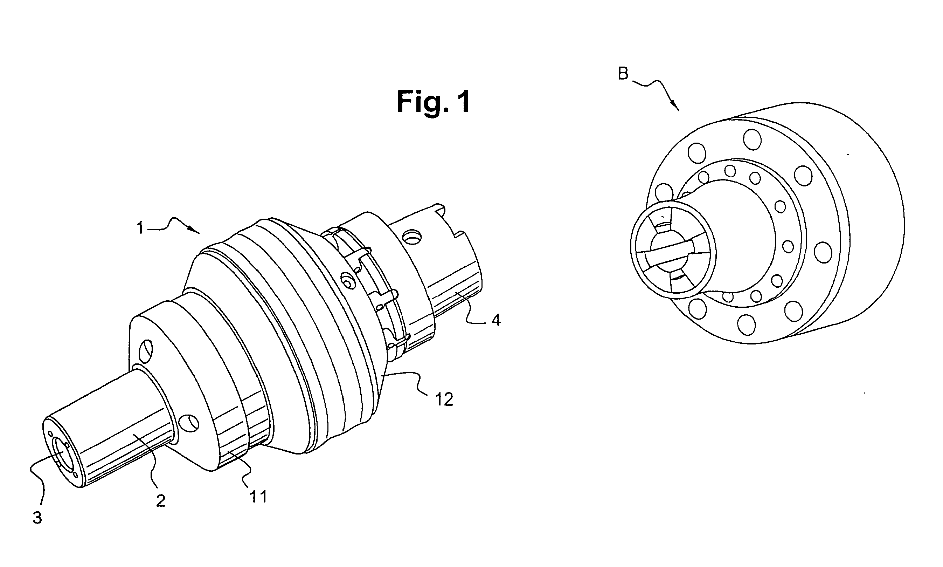

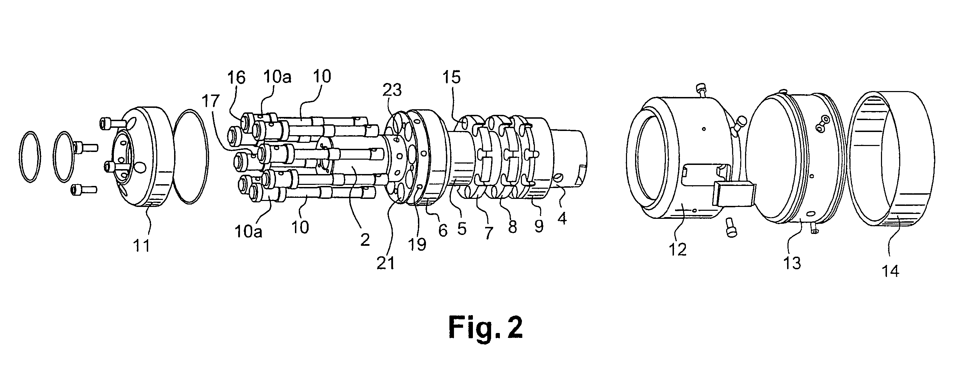

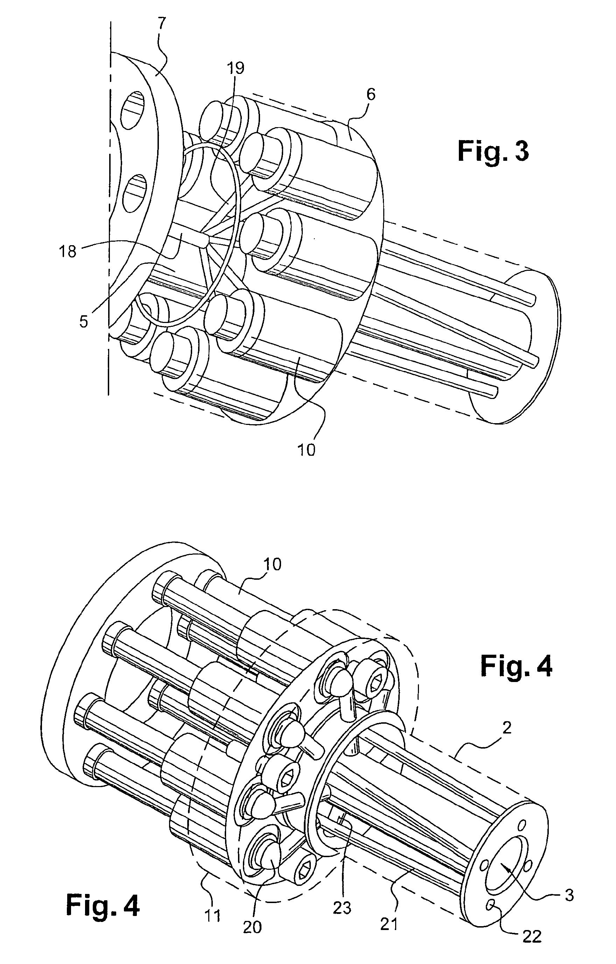

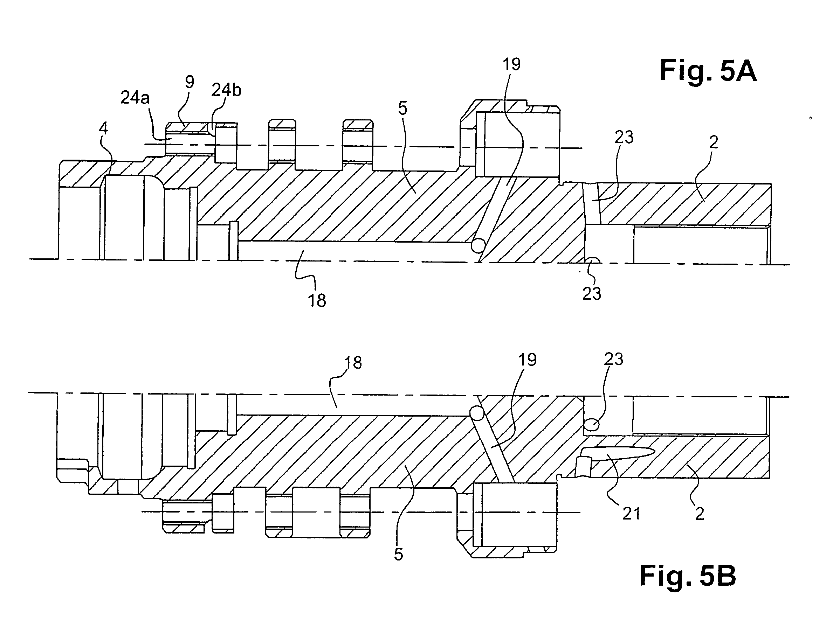

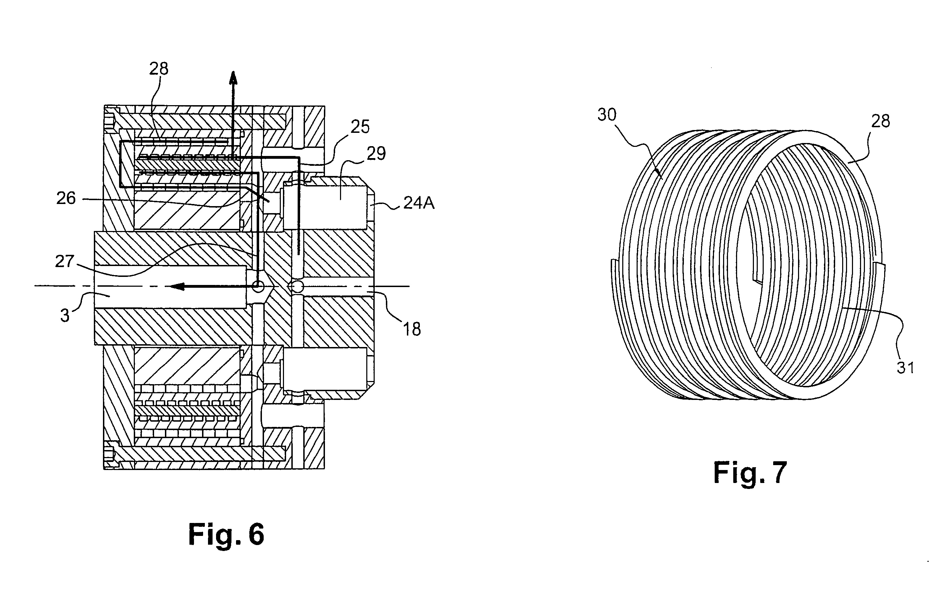

D'autres caractéristiques et avantages de l'invention seront apparents à la lecture de la description qui suit d'un exemple de réalisation non limitatif de l'invention accompagné des dessins qui représentent:
en figure 1: une vue en perspective d'un porte outil selon l'invention,
en figure 2: une vue du porte outil de la figure 1 représenté en éclaté et en perspective,
en figure 3: une vue d'un détail du porte outil de la figure 1 en transparence,
en figure 4: une vue du détail de la figure 3 sous un autre angle en transparence,
aux figures 5A et 5B: des demi-vues en coupe longitudinales du corps du porte outil de la figure 1 selon des angles de coupe décalés;
en figure 6: une vue en coupe d'un exemple de réalisation du porte outil selon un mode de réalisation complémentaire de l'invention;
en figure 7: un détail de réalisation du porte outil de la figure 6.

L'invention concerne un porte outil intégrant une fonctionnalité de refroidissement par soufflage d'air froid avec une température variable suivant le besoin.

Ce refroidissement s'opère au niveau de l'outil animé d'un mouvement de rotation et/ou de translation et est dirigé au niveau de l'emmanchement de l'outil sur le porte outil au niveau de l'axe de l'outil et/ou par voie externe.

L'invention est ici décrite dans le cadre d'un mandrin porte outil de perçage mais ce principe peut être utilisé pour des outils de coupe.

Le porte outil 1 représenté à la figure 1 est constitué par un mandrin qui s'emmanche sur une broche "B" de type connu, par exemple pour attachement de type HSK selon la norme DIN 69839 ou SA d'une machine comportant une conduite d'amenée d'air comprimé et pour laquelle l'alimentation en air comprimé autour de l'outil se fait traditionnellement lors de l'emmanchement de l'outil sur la broche de la machine. Le porte outil de l'invention vient en remplacement d'un mandrin porte outils traditionnel et il comporte à une première extrémité un embout 4 de montage sur une broche traditionnelle d'une machine d'usinage, à une seconde extrémité une broche 2 de réception d'un embout de montage d'un outil, l'embout et la broche étant dimensionnés pour permettre de disposer le porte outil en lieu et place de l'outil sur la machine, et comporte entre les deux extrémités un corps central porteur d'un dispositif de refroidissement d'air à tubes vortex.

Le porte outil est représenté en éclaté à la figure 2.

Selon cet exemple, le corps central 5 muni de l'embout 4 et de la broche 2 reçoit sur sa périphérie huit tubes vortex 10 disposés annulairement autour du corps central 5.

Les tubes vortex sont entièrement intégrés au porte outil et sont reçus dans des logements 15 réalisés dans des bagues annulaires 7, 8, 9 du corps central, l'extrémité 10a du tube vortex comportant la sortie froide 16 et l'entrée d'air comprimé 17 étant reçue dans une collerette 6.

L'extrémité du corps central comportant la broche 2 recevant l'outil reçoit une cloche 11 pourvue de canaux de distribution de l'air refroidi par les tubes vortex 10.

Les tubes sont recouverts par un capot cylindrique 12 sur lequel vient s'adapter une bague annulaire 13 recouverte d'un manchon élastomère 14.

L'embout comporte un alésage 18 d'amenée d'air comprimé se prolongeant dans le corps central selon la figure 3 vue en transparence et relié à des canaux radiaux 19 de distribution réalisés dans la collerette 6 du corps central en communication avec la ou les entrées d'air du dispositif à tube vortex.

Les tubes vortex sont disposés de telle sorte que l'air est refroidi au plus près de l'outil pour éviter un réchauffement de cet air durant son transport dans des canalisations du mandrin.

Pour simplifier la conception on réalise le mandrin côté outil comme une broche classique avec circulation d'huile de lubrification et on fait passer l'air dans les trous de lubrification de l'outil et autour de l'outil pour améliorer son refroidissement.

Pour cela, comme représenté en figure 4, les sorties froides 16 des tubes sont appliquées contre la cloche 11 qui comporte des tubes 20 de distribution d'air refroidi dont les sorties sont en communication d'une part avec des canaux 21 de la broche 2 munis de sorties 22 autour de l'emmanchement de l'outil dans la broche 2 et, d'autre part avec des canaux 23 de la broche 2 en communication avec son trou central 3 de réception de l'outil.

Les figures 5A et 5B représentent le corps central 5 en coupe selon deux plans de coupe décalés angulairement par rapport à l'axe longitudinal du corps central.

Sur la figure 5A sont représentés l'alésage 18 d'amenée de l'air comprimé alimentant les tubes vortex et un canal 19 reliant cet alésage à l'entrée d'air d'un tube vortex.

De même, cette figure permet de voir un des canaux 23 reliant la cloche 11 à l'alésage central de la broche 2 pour amener l'air froid vers le centre de l'outil ainsi que la sortie 24 aménagée dans la dernière bague 9 de retenue des tubes, un trou 24b permettant à de l'air ambiant de se mélanger avec l'air chaud sous pression sortant du tube pour participer à son refroidissement.

Sur la figure 5B décalée angulairement on distingue une partie d'un canal 21 amenant l'air froid au bout de la broche 2 pour refroidir la périphérie de l'outil, au travers des goujures de l'outil par exemple dans le cas d'un outil de perçage.

Ces derniers canaux sont désaxés par rapport à l'axe du porte outil pour orienter le flux d'air correctement lorsque le porte outil et l'outil sont en rotation rapide.

Selon l'exemple représenté, quatre tubes vortex alimentent quatre canaux 21 périphériques et quatre tubes vortex alimentent l'intérieur de la broche 2.

Le refroidissement de l'air comprimé pour refroidir l'outil peut être réalisé par deux moyens:
- soit l'outil est alimenté directement par l'air qui sort des tubes vortex comme représenté sur les figures 3 et 4 en particulier;
- soit l'outil est alimenté au moins au travers d'un échangeur également embarqué comme représenté à la figure 6. Les tubes vortex alimentent alors le circuit primaire de l'échangeur en air froid, le circuit secondaire refroidissant l'air comprimé avant son entrée dans les canaux de l'outil.

Selon cette figure 6, l'arrivée d'air comprimé 18 distribuant les tubes vortex disposés dans des logements 29 est en outre en communication avec des premiers canaux 25 amenant l'air comprimé à un échangeur 28.

L'air passant dans l'échangeur est amené au centre du mandrin porte outil 3 par des deuxièmes canaux 27.

Le circuit d'air refroidi sortant des vortex passe par des canaux 26 pour alimenter l'échangeur 28 puis s'échappe vers l'extérieur.

L'outil reçoit donc dans ce dernier cas de l'air comprimé refroidi par le circuit secondaire à une pression très voisine de celle du réseau d'air comprimé de l'usine puisque l'on n'utilise pas uniquement la fraction d'air froid sortant directement du vortex et on obtient une plus grande pression de soufflage au détriment du rendement du dispositif de refroidissement.

Une partie d'un exemple d'échangeur 28 est représenté à la figure 7.

L'échangeur est ici de forme annulaire et est constitué d'un matériau procurant un bon transfert thermique comme le cuivre par exemple.

Le circuit d'air venant des vortex comporte un double hélice externe 30, le circuit d'air comprimé comporte une double hélice interne 31 de sorte que l'air puisse circuler en aller retour au niveau de l'échangeur.

Un transfert thermique s'effectue entre l'air comprimé et l'air refroidi par les tubes vortex en sorte de refroidir l'air comprimé.

Ainsi on dispose d'un plus grand débit d'air refroidi ce qui augmente la puissance de refroidissement par l'intérieur des canaux de l'outil par rapport à l'usage de la sortie froide des tubes vortex.

L'échangeur vient se monter en lieu et place de la cloche 11 de la figure 2 et est concentrique à la broche 2 servant au frettage de l'outil.

Cette dernière solution peut être combinée à la solution pour laquelle des tubes vortex alimentent directement la zone de travail, les canaux d'alimentation étant répartis selon des rayons angulairement espacés autour de l'axe de l'outil comme dans le case des figures 3 et 4 pour que l'air comprimé entrant dans le porte outil soit distribué alternativement selon la circonférence du porte outil dans les tubes vortex à sorties directes et dans l'échangeur.

Lors de l'utilisation du porte outil, les tubes vortex fonctionnent en continu et permettent de refroidir, lubrifier l'outil et de chasser les copeaux durant l'usinage.

Ils permettent en outre d'abaisser la température de l'outil entre deux usinages. L'opérateur n'a pas de manipulation particulière à effectuer durant l'usinage et les pièces usinées ainsi que l'environnement de la machine ne sont pas pollués par du liquide de lubrification.

Le principe de l'invention permet de réaliser un mandrin porte outil qui refroidit de plusieurs centaines de degrés l'environnement proche de l'outil.

L'invention permet ainsi:
- de diminuer les températures de l'outil et de la pièce autour de l'outil en vue d'une amélioration du comportement à l'endommagement de l'outil et du matériau dans lequel il évolue,
- de diminuer le phénomène de collage entre l'outil et le matériau dans lequel il évolue,
- d'optimiser les vitesses d'évolution de l'outil dans la matière, soit la vitesse d'enfoncement soit la vitesse de translation, ce qui aura un impact direct sur la productivité de l'usinage.

Selon l'invention on refroidit l'outil par un soufflage d'air refroidi au moyen d'un dispositif vortex disposé sur un mandrin se positionnant entre l'outil et une broche d'une machine pourvue d'une alimentation en air comprimé.

Préférablement on souffle l'air refroidi autour de l'outil et/ou dans un canal de l'outil.

L'invention trouve une application pour tout procédé de fabrication dans lequel un outil rotatif évolue dans une matière et notamment le fraisage et le perçage.

## Revendications

1. Porte outils (1), pour machine d'usinage comportant des moyens de refroidissement d'un outil par soufflage d'air comprimé, comprenant un dispositif de refroidissement de l'air comprimé par un dispositif à tubes vortex, **caractérisé en ce qu'**il est de forme générale cylindrique et qu'il comprend une pluralité de tubes vortex disposés de manière annulaire autour de l'axe du cylindre, le dispositif à tubes vortex alimentant en air froid un circuit primaire d'un échangeur (28), un circuit secondaire de l'échangeur refroidissant de l'air comprimé avant son entrée dans des canaux de l'outil.

2. Porte outil selon la revendication 1 pour lequel l'échangeur (28) est de forme annulaire.

3. Porte outil selon la revendication 2 pour lequel le circuit d'air venant des vortex comporte une double hélice externe (30), le circuit d'air comprimé comporte une double hélice interne (31) de sorte que l'air puisse circuler en aller retour au niveau de l'échangeur, un transfert thermique s'effectuant entre l'air comprimé et l'air refroidi par les tubes vortex en sorte de refroidir l'air comprimé.

4. Porte outil selon la revendication 3 **caractérisé en ce que** l'échangeur (28) est concentrique à la broche (2) servant au frettage de l'outil.

5. Porte outil selon l'une quelconque des revendications 1 à 4 **caractérisé en ce que** une partie des tubes vortex alimente directement la zone de travail, les canaux d'alimentation étant répartis selon des rayons angulairement espacés autour de l'axe de l'outil en sorte de distribuer l'air comprimé entrant dans le porte outil alternativement selon la circonférence du porte outil dans les tubes vortex à sorties directes et dans l'échangeur (28).

6. Porte outil selon l'une quelconque des revendications précédentes **caractérisé en ce que** l'embout est pourvu d'un alésage (18) d'amenée d'air comprimé se prolongeant dans un corps central du porte outil et relié à des canaux radiaux (19) de distribution réalisés dans une collerette (6) du corps central en communication avec les entrées d'air des vortex du dispositif à tubes vortex, **en ce que** les tubes vortex sont entièrement intégrés au porte outil et **en ce que** l'extrémité du corps central comportant la broche (2) recevant l'outil reçoit une cloche (11) pourvue de canaux de distribution de l'air refroidi par les tubes vortex (10).

7. Porte outils (1) pour machine d'usinage comportant des moyens de refroidissement d'un outil par soufflage d'air comprimé, comprenant un dispositif de refroidissement de l'air comprimé par un dispositif à tubes vortex, **caractérisé en ce que** le porte outil est de forme générale cylindrique et comprend une pluralité de tubes vortex disposés de manière annulaire autour de l'axe du cylindre et dont les sorties d'air froid sont dirigées vers l'outil porté par le porte outil.

8. Porte outils selon la revendication 7 **caractérisé en ce que** le dispositif à tubes vortex comporte des tubulure d'amenée d'air débouchant en périphérie de l'outil en sorte réaliser un soufflage par les goujures de l'outil.

9. Porte outils selon la revendication 7 ou 8 **caractérisé en ce que** le dispositif à tubes vortex comporte au moins une tubulure d'amenée d'air centrale débouchant au niveau de trous de l'outil pour réaliser un soufflage dans l'axe de l'outil.

10. Porte outils selon la revendication 7, 8 ou 9 **caractérisé en ce qu'**il comporte à une première extrémité un embout (4) d'emmanchement adapté à le monter en lieu et place de l'outil sur la broche d'une machine d'usinage et comporte à une seconde extrémité opposée à la première une broche (2) porte outil, et **en ce que** les sorties d'une première partie des tubes sont en communication avec des tubes (20) de distribution d'air refroidi dont les sorties sont en communication d'une part avec des canaux (21), de la broche (2) porte outil, munis de sorties (22) autour de l'emmanchement de l'outil dans la broche (2) porte outil et, d'autre part avec des canaux (23) de la broche (2) porte outil en communication avec son trou central (3) de réception de l'outil.

## Claims

1. Tool holder (1) for a machine tool, comprising means of cooling a tool by blowing compressed air, comprising a device for cooling the compressed air using a vortex tubes device, **characterized in that** it is of cylindrical overall shape and comprises a plurality of vortex tubes arranged in an annulus around the axis of the cylinder, the vortex tubes device supplying cold air to a primary circuit of an exchanger (28), a secondary circuit of the exchanger cooling the compressed air before it enters the passageways of the tool.

2. Tool holder according to Claim 1, for which the exchanger (28) is of annular shape.

3. Tool holder according to Claim 2, for which the air circuit leading from the vortex tubes comprises an external double helix (30), the compressed air circuit comprises an internal double helix (31) so that the air can flow out and back through the exchanger, a transfer of heat taking place between the compressed air and the air cooled by the vortex tubes so as to cool the compressed air.

4. Tool holder according to Claim 3, **characterized in that** the exchanger (28) is concentric with the spindle (2) used to clamp the tool.

5. Tool holder according to any one of Claims 1 to 4, **characterized in that** part of the vortex tubes feeds directly into the work zone, the supply passageways being distributed on radii that are angularly spaced around the axis of the tool so as to distribute the compressed air entering the tool holder alternately along the circumference of the tool holder into the direct-outlet vortex tubes and into the exchanger (28).

6. Tool holder according to any one of the preceding claims, **characterized in that** the end piece is provided with a compressed air conveying bore (18) extending into a central body of the tool holder and connected to radial distribution passageways (19) created in a flange (6) of the central body in communication with the air inlets of the vortices of the vortex tubes device, **in that** the vortex tubes are fully incorporated into the tool holder, and **in that** the end of the central body comprising the spindle (2) that accepts the tool receives a bell (11) provided with passageways for distributing the air cooled by the vortex tubes (10).

7. Tool holder (1) for a machine tool comprising means for cooling a tool by blowing compressed air, comprising a device for cooling the compressed air using a vortex tubes device, **characterized in that** the tool holder is of cylindrical overall shape and comprises a plurality of vortex tubes arranged in an annulus around the axis of the cylinder and the cold air outlets of which are directed towards the tool held by the tool holder.

8. Tool holder according to Claim 7, **characterized in that** the vortex tubes device comprises air conveying nozzles opening at the periphery of the tool in order to blow along the flutes of the tool.

9. Tool holder according to Claim 7 or 8, **characterized in that** the vortex tubes device comprises at least one central air conveying nozzle opening at holes in the tool in order to blow along the axis of the tool.

10. Tool holder according to Claim 7, 8 or 9, **characterized in that** it comprises at a first end a push-fit end piece (4) suited to being mounted in place of the tool on the spindle of a machine tool and at a second end opposite to the first end comprises a tool holder spindle (2), and **in that** the outlets of a first part of the tubes are in communication with cooled air distribution tubes (20) the outlets of which are in communication firstly with passageways (21) in the tool holder spindle (2), equipped with outlets (22) around where the tool is push fitted into the tool holder spindle (2), and secondly with passageways (23) of the tool holder spindle (2) in communication with the central tool-accepting hole (3) thereof.

## Patentansprüche

1. Werkzeughalter (1) für eine Bearbeitungsmaschine, der Einrichtungen zur Kühlung eines Werkzeugs durch Blasen von Druckluft aufweist, der eine Vorrichtung zur Kühlung der Druckluft durch eine Vorrichtung mit Wirbelrohren enthält, **dadurch gekennzeichnet, dass** er von allgemein zylindrischer Form ist, und dass er eine Vielzahl von Wirbelrohren enthält, die ringförmig um die Achse des Zylinders angeordnet sind, wobei die Vorrichtung mit Wirbelrohren einen Primärkreislauf eines Tauschers (28) mit Kaltluft speist, wobei ein Sekundärkreislauf des Tauschers Druckluft vor ihrem Eintritt in Kanäle des Werkzeugs kühlt.

2. Werkzeughalter nach Anspruch 1, bei dem der Tauscher (28) ringförmig ist.

3. Werkzeughalter nach Anspruch 2, bei dem der von den Wirbeln kommende Luftkreislauf eine doppelte Außenschraube (30) aufweist, der Druckluftkreislauf eine doppelte Innenschraube (31) aufweist, damit die Luft im Bereich des Tauschers hin und her zirkulieren kann, wobei eine Wärmeübertragung zwischen der Druckluft und der gekühlten Luft durch die Wirbelrohre erfolgt, um die Druckluft zu kühlen.

4. Werkzeughalter nach Anspruch 3, **dadurch gekennzeichnet, dass** der Tauscher (28) konzentrisch zu der Spindel (2) ist, die zum Einspannen des Werkzeugs dient.

5. Werkzeughalter nach einem der Ansprüche 1 bis 4, **dadurch gekennzeichnet, dass** ein Teil der Wirbelrohre die Arbeitszone direkt versorgt, wobei die Versorgungskanäle gemäß Radien verteilt sind, die winkelmäßig um die Achse des Werkzeugs beabstandet sind, um die in den Werkzeughalter eindringende Druckluft abwechselnd gemäß dem Umfang des Werkzeughalters in die Wirbelrohre mit direkten Ausgängen und in den Tauscher (28) zu verteilen.

6. Werkzeughalter nach einem der vorhergehenden Ansprüche, **dadurch gekennzeichnet, dass** das Anschlussstück mit einer Bohrung (18) für die Druckluftzufuhr versehen ist, die sich in einem zentralen Körper des Werkzeughalters verlängert und mit radialen Verteilungskanälen (19) verbunden ist, die in einem Kragen (6) des zentralen Körpers hergestellt sind, der mit den Lufteingängen der Wirbel der Vorrichtung mit Wirbelrohren in Verbindung steht, dass die Wirbelrohre ganz in den Werkzeughalter integriert sind, und dass das Ende des zentralen Körpers, das die das Werkzeug aufnehmende Spindel (2) aufweist, eine Glocke (11) aufnimmt, die mit Verteilungskanälen der von den Wirbelrohren (10) gekühlten Luft versehen ist.

7. Werkzeughalter (1) für eine Bearbeitungsmaschine, der Einrichtungen zur Kühlung eines Werkzeugs durch Blasen von Druckluft aufweist, der eine Vorrichtung zur Kühlung der Druckluft durch eine Vorrichtung mit Wirbelrohren enthält, **dadurch gekennzeichnet, dass** der Werkzeughalter eine allgemein zylindrische Form hat und eine Vielzahl von Wirbelrohren enthält, die ringförmig um die Achse des Zylinders angeordnet sind und deren Kaltluftausgänge zum vom Werkzeughalter getragenen Werkzeug gerichtet sind.

8. Werkzeughalter nach Anspruch 7, **dadurch gekennzeichnet, dass** die Vorrichtung mit Wirbelrohren Luftzufuhrstutzen aufweist, die am Umfang des Werkzeugs münden, um ein Blasen durch die Span-Nuten des Werkzeugs durchzuführen.

9. Werkzeughalter nach Anspruch 7 oder 8, **dadurch gekennzeichnet, dass** die Vorrichtung mit Wirbelrohren mindestens einen zentralen Luftzufuhrstutzen aufweist, der im Bereich von Löchern des Werkzeugs mündet, um ein Blasen in der Achse des Werkzeugs durchzuführen.

10. Werkzeughalter nach Anspruch 7, 8 oder 9, **dadurch gekennzeichnet, dass** er an einem ersten Ende ein Presspass-Anschlussstück (4) aufweist, das geeignet ist, um es anstelle des Werkzeugs auf die Spindel einer Bearbeitungsmaschine zu montieren, und an einem zweiten Ende entgegengesetzt zum ersten eine Werkzeughalter-Spindel (2) aufweist, und dass die Ausgänge eines ersten Teils der Rohre mit Verteilerrohren (20) gekühlter Luft in Verbindung stehen, deren Ausgänge einerseits mit Kanälen (21) der Werkzeughalter-Spindel (2), die mit Ausgängen (22) um die Presspassung des Werkzeugs in der Werkzeughalter-Spindel (2) versehen sind, und andererseits mit Kanälen (23) der Werkzeughalter-Spindel (2) in Verbindung stehen, die mit ihrem zentralen Loch (3) zur Aufnahme des Werkzeugs in Verbindung stehen.
